# EUROPÄISCHE PATENTSCHRIFT

(11) **EP 2 762 362 B1**
(45) Veröffentlichungstag und Bekanntmachung des Hinweises auf die Patenterteilung: **11.09.2019**
(21) Anmeldenummer: 14151698.9
(22) Anmeldetag: 20.01.2014
(51) Int. Cl.: B60Q 3/54, B60Q 3/62, B60Q 3/64, B60Q 3/20, B60Q 3/217, B60Q 3/233, B60Q 3/74, B60Q 3/76, B60Q 3/14

(54) **INNENVERKLEIDUNGSTEIL FÜR EIN KRAFTFAHRZEUG UND VERFAHREN ZU DESSEN HERSTELLUNG**
INTERIOR LINING COMPONENT FOR A MOTOR VEHICLE AND METHOD FOR MANUFACTURING IT
PIÈCE D'HABILLAGE INTÉRIEUR POUR VÉHICULE AUTOMOBILE ET SON PROCÉDÉ DE FABRICATION

(30) Priorität: 30.01.2013 DE 102013100941
(43) Veröffentlichungstag der Anmeldung: 06.08.2014
(73) Patentinhaber: International Automotive Components Group GmbH, 40472 Düsseldorf (DE)
(72) Erfinder: Cannon, Carter Scott, 80539 München (DE); Behnke, Michael, 85591 Vaterstetten (DE)
(74) Vertreter: Liesegang, Eva

(56) Entgegenhaltungen:
- EP-A1- 2 060 444
- EP-A1- 2 072 332
- FR-A1- 2 747 971
- FR-A1- 2 875 580
- FR-A1- 2 877 896
- FR-A1- 2 937 929

## Beschreibung

Die Erfindung betrifft ein Innenverkleidungsteil für ein Kraftfahrzeug, das eine Beleuchtung für den Innenraum des Kraftfahrzeugs bereitstellen kann.

Innenbeleuchtungssysteme für Kraftfahrzeuge dienen entweder allgemein der Raumbeleuchtung oder Hintergrundbeleuchtung, oder sie werden zum Beleuchten einzelner Objekte aus ästhetischen oder funktionalen Gründen verwendet. Für die Innenbeleuchtung wurden früher in der Regel Glühbirnen verwendet, und zwar sowohl für die Raumbeleuchtung als auch für die Beleuchtung einzelner Objekte. Zunehmend werden für die Beleuchtung auch LEDs eingesetzt. Es ist ferner bekannt, Beleuchtungssysteme in Innenverkleidungsteile zu integrieren, wobei hierbei verschiedenen Einschränkungen beachtet werden müssen, wie die Wärmeerzeugung durch die Beleuchtungssysteme, die Anfälligkeit der Beleuchtungssysteme gegen Beschädigung und auch die Unterbringung der Beleuchtungssysteme derart, dass sie unauffällig sind und sich gut in die Innenverkleidungsteile integrieren.

Die EP 2 228 258 A2 der Anmelderin beschreibt die Integration von LEDs und zugehöriger Ansteuerelektronik in Innenverkleidungsteile. Ein relativ dünnes gedrucktes LED-Hintergrundbeleuchtungsbauteil mit integriertem Diffuser wird in einem Formungsprozess in ein Innenverkleidungsteil integriert. Die eigentliche Lichtquelle des LED-Hintergrundbeleuchtungsbauteils wird hinter einer Gewebeoberfläche oder einem Gitter verborgen oder bildet direkt die Außenfläche des Innenverkleidungsteils, um eine Beleuchtung bereitzustellen. Eine ähnliche Anordnung ist aus der DE 10 2010 036 795 A1 bekannt.

Die US RE 42 340 E beschreibt ein Innenbeleuchtungssystem für ein Kraftfahrzeug, das Elektrolumineszenzplatten verwendet, die zwischen einem Trägersubstrat und einer Deckschicht angeordnet sind, wobei die Deckschicht lichtdurchlässig ist. In dem Trägersubstrat oder der Deckschicht können Ausnehmungen zur Aufnahme der Elektrolumineszenzplatte vorgesehen sein, sodass diese sich durch das Material der Deckschicht nicht abzeichnet und von außen nicht wahrnehmbar ist.

Auch 366 A1 beschreibt ein Innenverkleidungsteil mit einer hinterleuchteten Dekorschicht, wobei zwischen Trägersubstrat und Dekorschicht eine lichtleitende Schicht eingebracht ist.

Bei den bekannten derartigen Beleuchtungssystemen, die in eine Innenverkleidung eines Kraftfahrzeugs integriert sind, befindet sich die lichtleitende und lichtemittierende Schicht stets zwischen dem Trägersubstrat, das die Kontur der Innenverkleidung bestimmt, und einer ein- oder mehrlagigen Deckschicht. Durch Einbetten der lichtemittierenden Schicht zwischen Trägersubstrat und Deckschicht ist die lichtemittierende Schicht im ausgeschalteten Zustand im Wesentlichen nicht wahrnehmbar, und sie ist zwischen Deckschicht und Trägersubstrat geschützt. Die Beleuchtungssysteme des Standes der Technik haben jedoch auch eine Reihe von Nachteilen.

Um die lichtemittierende Schicht mit einer zugehörigen Ansteuerelektronik und/oder Lichtquellen zu verbinden und/oder mit Strom zu versorgen, müssen Anschlüsse der lichtemittierenden Schicht in das Trägersubstrat integriert oder auf die Rückseite des Trägersubstrates geführt werden. Hiermit befasst sich die DE 10 2010 036 795 A1.

FR 2877896 A1 beschreibt ein Innenverkleidungsteil für Kraftfahrzeuge in Form eines Einsatzes, der ein Trägerbauteil und eine Deckschicht aufweist. Auf der Rückseite des Trägerbauteils ist eine Beleuchtungseinrichtung mit einer Lichtquelle in einem Gehäuse angeordnet.

Die Druckschriften EP 2072332 A1 und FR 2937929 A1 offenbaren jeweils ein Lichtleitfasergewebe zur Hinterbeleuchtung von lichtdurchlässigen Paneelen.

Die EP 2060444 A1 beschreibt ein Innenverkleidungsbauteil mit einem Träger, einer Dekorschicht auf der einen und einer Lumineszenzschicht auf der anderen Seite des Trägers. Auf die Lumineszenzschicht folgt ein UV-LED-Strip mit UV-LEDs als Anregungsquellen.

Insbesondere wenn die lichtemittierende Schicht eine größere Fläche des Trägersubstrats abdeckt und dabei über Kanten, Ecken oder ähnliche Vorsprünge des Trägersubstrats geführt und an diesen Stellen gebogen wird, können sich dort Hot Spots bilden, die zu einer übermäßigen Wärmeerzeugung führen, wodurch das Material der lichtemittierenden Schicht oder benachbarte Bauteile beschädigt werden können. An diesen Stellen kann auch die Lichtabgabe erhöht sein, sodass es gerade bei stärker konturierten Innenverkleidungsteilen schwierig ist, eine gleichmäßige Oberflächenbeleuchtung zu erzielen.

Lichtemittierende Schichten, die zum Beispiel aus Lumineszenzplatten, lichtleitenden Folien, transparenten oder transluzenten Textilien oder Vliesen, LED-Folien oder dergleichen gebildet sind, sind darüber hinaus in der Regel sehr empfindlich gegen Beschädigung durch mechanische Einwirkung, wie Stöße, Schläge oder Punktieren mit spitzen Gegenständen, oder durch Flüssigkeiten und Chemikalien. Die über der lichtemittierenden Schicht aufgebrachte Deckschicht kann daher nicht unter allen Umständen einen ausreichenden Schutz des Beleuchtungssystems bieten.

Es ist eine Aufgabe der Erfindung, ein Innenverkleidungsteil für ein Kraftfahrzeug anzugeben, das die oben genannten Nachteile überwindet. Insbesondere soll auch für stärker konturierte Innenverkleidungsteile eine gleichmäßigere Beleuchtungsverteilung über der Fläche des Innenverkleidungsteils erzielt werden.

Diese Aufgabe wird durch ein Innenverkleidungsteil mit den Merkmalen von Patentanspruch 1 und ein Verfahren nach Anspruch 12 gelöst. Ausführungsformen der Erfindung sind in den abhängigen Ansprüchen angegeben.

Das Innenverkleidungsteil gemäß der Erfindung umfasst ein Trägerbauteil, das die Kontur des Innenverkleidungsteils bestimmt, eine Deckschicht, die auf einer Sichtseite des Trägerbauteils aufgebracht ist, und eine lichtemittierende Schicht, die auf einer Rückseite des Trägerbauteils aufgebracht ist. Das Trägerbauteil und die Deckschicht sind transparent, teiltransparent oder tranluzent oder, anders gesagt, in irgendeiner Form lichtdurchlässig. Im Verhältnis zum Stand der Technik ist somit die Reihenfolge der verschiedenen Lagen, die das beleuchtete Innenverkleidungsteil bilden, verändert.

Durch die Anordnung der lichtemittierenden Schicht auf der Rückseite des Trägerbauteils können eine Vielzahl von Problemen gelöst und zahlreiche Vorteile erreicht werden. Da es bei dieser Anordnung nicht nötig ist, die Anschlüsse für die lichtemittierende Schicht oder ein Anschlussende der lichtemittierenden Schicht selbst von der Sichtseite des Trägerbauteils auf dessen Rückseite zu führen, um die lichtemittierende Schicht an eine Lichtquelle und/oder Stromquelle und/oder Steuerung anzuschließen, können nicht nur Durchbrüche in dem Trägerbauteil entfallen, sondern es kann auch eine Biegung der lichtemittierenden Schicht um den äußeren Rand des Trägerbauteils oder entlang der Kante eines entsprechenden Durchbruchs vermieden werden.

Wenn die lichtemittierende Schicht auf der Rückseite des Trägerbauteils angeordnet ist, muss sie auch die Kontur des Trägerbauteils nicht präzise abbilden, sondern sie kann Erhebungen, Kante, Rippen etc. relativ lose überspannen. Somit wird die lichtemittierende Schicht nicht oder nur unerheblich gebogen, und die Kontur des Trägerbauteils übt auf die lichtemittierende Schicht keinen Druck aus. Dadurch kann die Bildung von Hot Spots vermieden werden, und die Lichtabgabe wird weitgehend gleichmäßig sein.

Zudem kann das lichtdurchlässige Trägerbauteil als ein Diffuser dienen, wodurch die Lichtabgabe besonders gleichmäßig ist und Abweichungen in der Lichtintensität noch nicht einmal im Bereich von Sicken, Rippen oder dergleichen wahrgenommen werden.

Durch die Anordnung der lichtemittierenden Schicht auf der Rückseite des Trägerbauteils ist diese noch besser gegen äußere Einflüsse, Schläge, Stiche, Verschmutzung, Chemikalien, Flüssigkeiten etc. geschützt als nur durch das Aufbringen der Deckschicht, wie im Stand der Technik.

Der Herstellungsprozess des Innenverkleidungsbauteils, insbesondere das Formen des Trägerbauteils und das Aufkaschieren der Deckschicht kann mit üblichen Herstellungsverfahren erfolgen, ohne bei der Auslegung von zum Beispiel Temperatur und Druck Rücksicht nehmen zu müssen auf eine empfindliche lichtemittierende Schicht. Die lichtemittierende Schicht kann in einem letzten Arbeitsschritt, nach der Fertigstellung des Verbunds aus Trägerbauteil und Deckschicht, auf die Rückseite des Trägerbauteils aufgebracht werden. Dadurch kann die in der Regel empfindliche und teure lichtemittierende Schicht geschont. Es ist möglich, die lichtemittierende Schicht vor der Montage zu testen und so Ausschuss zu vermeiden.

Die Veränderung der Reihenfolgen der einzelnen Schichten des Innenverkleidungsteils mag zunächst als eine einfache Lösung erscheinen, sie ist für den Fachmann jedoch nicht naheliegend. Man sollte beachten, dass der Fachmann bei der Konstruktion eines Innenverkleidungsteils stets mit dem Trägerbauteil oder Trägersubstrat beginnt und dann weitere Funktions- und Dekorschichten konzipiert, die nacheinander auf die A-Seite des Trägerbauteils aufgebracht werden. Eine lichtemittierende Schicht, die der Beleuchtung der Sichtseite des Trägerbauteils dienen soll, wird im Stand der Technik stets auf der Sichtseite des Trägers angeordnet. Sie auf der Rückseite des Trägerbauteils anzuordnen, liegt nicht auf der Hand und wurde auch von dem Erfinder während der Entwicklung des Innenverkleidungsteils lange Zeit nicht in Betracht gezogen; denn das Trägerbauteil wird in der Regel in Bezug auf seine Tragfunktion konzipiert, auf der Rückseite des Trägerbauteils kommen diejenigen Funktionseinheiten zu liegen, die vor den Insassen eines Fahrzeuges verborgen werden sollen, und auf seine Vorderseite diejenigen, die dem optischen Erscheinungsbild dienen. Dieser Grundsatz wird bei der Erfindung aufgegeben.

In einer Ausgestaltung ist die Deckschicht mit dem Trägerbauteil dauerhaft verbunden, beispielsweise aufkaschiert, und die lichtemittierende Schicht ist mit dem Trägerbauteil lösbar verbunden, zum Beispiel über eine Rast-, Schnapp- oder Schraubverbindung. Dies erlaubt es, die lichtemittierende Schicht auch nach der Herstellung des Innenverkleidungsteils zu warten oder gegebenenfalls auszutauschen, wenn ein Fehler oder eine Beschädigung festgestellt wird.

Die lichtemittierende Schicht ist auf eine Tragschicht aufgebracht sein, um sie zu stabilisieren und gegen Einflüsse von außen - auf der Rückseite der Innenverkleidung - zu schützen. Die Tragschicht kann auch dazu dienen, die lichtemittierende Schicht an der Rückseite des Trägerbauteils zu befestigen.

In einer Ausgestaltung ist die Tragschicht lichtundurchlässig, um zu verhindern, dass die lichtemittierende Schicht auf der Rückseite des Trägerbauteils Licht abstrahlt, das dann, wenn das Innenverkleidungsteil eingebaut ist, in der Umgebung des Innenverkleidungsteils unkontrolliert austritt, zum Beispiel an Nahtstellen, Spalten oder dergleichen. In einer anderen Ausgestaltung ist es auch möglich, das die lichtemittierende Schicht selbst auf ihrer Rückseite lichtundurchlässig ist, beispielsweise durch Aufbringen einer geeigneten Beschichtung oder durch eine in die Schicht integrierte Abschirmung.

Beispiele für die lichtemittierende Schicht sind ein Lichtleitfasern enthaltendes Gewebe, eine lichtleitende Folie oder Platte, eine Elektrolumineszenzfolie und eine LED-Anordnung, die auf einen leitenden oder optischen Film aufgebracht oder in diesen integriert ist. Noch speziellere Beispiele sind ein Gewebe aus lichtleitenden PMMA (Polymethyl-Metacrylat)-Fasern, extrudiertes PMMA in Plattenform, extrudierte Glasfasern in Plattenform, eine Lichtleitende Platte, zum Beispiel aus PMMA, PU (Polyurethan) oder PC (Polycarbonat), mit seitlicher Lichteinspeisung, eine Elektrolumineszenzfolie, ein Film oder eine Folie mit integrierten oder aufgedruckten LEDs, wobei die Folie elektrisch und/oder lichtleitend sein kann und wobei auch organische LEDs (OLEDs) zum Einsatz kommen können. Die Erfindung ist auf eine Schicht mit einem Lichtleitfasern enthaltenden Gewebe beschränkt, wobei bevorzugt ein Gewebe mit PMMA-Fasern eingesetzt wird.

In einer erfindungsgemäßen Ausgestaltung ist die lichtemittierende Schicht ein Lichtleitfasern enthaltendes Gewebe, und das Gewebe ist im Bereich eines Durchbruchs des Innenverkleidungsteils derart aufgetrennt, dass die Lichtleitfasern um den Durchbruch herum geführt sind, ohne die Lichtleitung zu unterbrechen.

Beispiele für Materialien des Trägerbauteils sind, ohne Beschränkung hierauf, ABS (Acrylnitrilbutadien), PC (Polycarbonat), PC-ABS, PMMA, PU, PET (Polyethylenterephthalat), zum Beispiel als Glas-Sandwichaufbau, etc. Das Trägerbauteil ist lichtdurchlässig und kann aus einem gefärbten oder ungefärbten Kunststoff hergestellt werden. Das Trägerbauteil ist die tragende Struktur des Innenverkleidungsteils, und es ist starr oder halbstarr, kann selbsttragend und/oder mit einer zusätzlichen Tragstruktur realisiert sein. Die äußere Kontur des Innenverkleidungsteils wird durch das Trägerbauteil bestimmt und durch die Deckschicht abgebildet.

Vorzugsweise ist das Trägerbauteil so konfiguriert, dass es als ein Streukörper für das von der lichtemittierenden Schicht emittierte Licht dient. Dadurch kann eine äußerst gleichmäßige Lichtabgabe auf der Sichtseite des Innenverkleidungsteils erreicht werden, in der auch im Bereich von Sicken, Rippen, Durchbrüchen, Kanten, Ecken etc. keine helleren oder dunkleren Oberflächenbereiche entstehen.

Die Deckschicht ist ebenfalls lichtdurchlässige, wobei die Lichtdurchlässigkeit der Deckschicht auch durch eine Perforation erreicht werden kann und/oder sich aus dem verwendeten Material ergibt. Die Deckschicht kann zum Beispiel als eine Kunststoffschicht aus TPU (Thermoplastisches Polyurethan), TPO (Thermoplastisches Elastomer auf Olefinbasis), PVC (Polyvinylchlorid), PU oder dergleichen hergestellt werden, wobei die Deckschicht aus einem Rollen oder Plattenmaterial als Zuschnitt geformt, in einer Form durch Spritzgießen, Schäumen oder dergleichen hergestellt, als Slush-Haut ausgebildet oder auf andere an sich bekannte Weise hergestellt sein kann. Es ist auch möglich, die Deckschicht als eine hinterschäumte Dekorschicht vorzusehen. Des Weiteren ist es möglich, die Deckschicht aus einem perforierten Leder, Kunstleder, Alcantara oder dergleichen herzustellen, wobei sie wiederum hinterschäumt sein kann. In anderen Ausgestaltungen ist es möglich, die Deckschicht aus einem gestrickten, gewebten, gewirkten, beflockten oder ähnlichem Textil-Material vorzusehen, das wiederum optional hinterschäumt sein kann. Die Deckschicht kann in sich eine Struktur oder ein Muster aufweisen und sie kann ein- oder mehrfarbig eingefärbt sein, ohne die Erfindung auf irgendeine der oben genannten Ausgestaltungen zu beschränken.

In einer Ausgestaltung kann zysätzlich zu der lichtemittierenden Schicht eine Reflektorschicht vorgesehen sein, welche die Lichtabgate verstärkt. Eine Reflektorschicht kann in die lichtemittierende Schicht integriert sein.

Die optionale Tragschicht der lichtemittierenden Schicht kann, ähnlich wie das Trägerbauteil aus Kunststoff hergestellt werden, zum Beispiel aus ABS, PC-ABS oder PC. Beispiele für Herstellungsverfahren für Trägerbauteile und Tragschicht sind Spritzgießen, Vakuumformen, Hinterspritzen, Kompressionsformen, Gießen und 3D-Drucken. Die Tragschicht kann aber auch aus einem anderen lichtundurchlässigen Material hergestellt sein, wie einem gestanzten Metallblech, Pappe, Papier, einer Faserplatte, einer Folie einschließlich Haftfolie.

Das Innenverkleidungsteil kann als ein Einlegeteil einer Innenverkleidung eines Kraftfahrzeugs oder als ein vollständiges Innenverkleidungsteil ausgebildet sein und beispielsweise in der Verkleidung einer Türinnenseite, einer Instrumententafel, einer Mittelkonsole, einer Säule eines Dachhimmels, eines Sitzes, einer Armstütze, eines Aufbewahrungsfachs oder einer Abdeckung hiervon, einer Bodenschwelle oder dergleichen eingesetzt werden.

Die Erfindung ist im Folgenden anhand der Figuren näher erläutert. In den Figuren zeigen:
- Fig. 1: zeigt eine perspektivische Explosionsdarstellung eines Innenverkleidungsteils gemäß einem Ausführungsbeispiel;
- Fig. 2: zeigt in perspektivischer Darstellung das Innenverkleidungsteil der Fig. 1 in teilmontiertem Zustand;
- Fig. 2A: zeigt in perspektivischer Darstellung eine alternative, nicht erfindungsgemäße Ausgestaltung des Irmenverkleidungsteils der Fig. 1 in teilmontiertem Zustand;
- Fig. 2B: zeigt in perspektivischer Darstellung eine weitere Ausgestaltung des Innenverkleidungsteils der Fig. 1 in teilmontiertem Zustand;
- Fig. 3: zeigt in perspektivischer Darstellung das Innenverkleidungsteil der Fig. 1 in zusammengesetztem Zustand;
- Fig. 4A: zeigt das Innenverkleidungsteil der Fig. 3, wobei Schnittlinien A und B angedeutet sind, und
- Fig. 4B: und 4C zeigen Schnittdarstellungen durch das Bauteil der Fig. 4A entlang der Linien A und B;
- Fig. 5, 5A und 5B: zeigen Schnittdarstellungen durch alternative Ausgestaltungen des Innenverkleidungsteils in auseinandergezogener Darstellung;
- Fig. 5C: zeigt eine Schnittdarstellung durch eine nicht erfindungsgemäße Variante des Innenverkleidungsteils in auseinandergezogener Darstellung;
- Fig. 5D: zeigt eine Schnittdarstellung durch eine weitere Variante des Innenverkleidungsteils in auseinandergezogener Darstellung;
- Fig. 6 und 7: zeigen Schnittdarstellungen durch alternative Ausgestaltungen des Innenverkleidungsteils;
- Fig. 8A: zeigt ein Innenverkleidungsteil, das in eine Türinnenverkleidung eingesetzt wird,
- Fig. 8B: zeigt die Türinnenverkleidung der Fig. 8A mit eingesetztem Innenverkleidungsteil,
- Fig. 9: zeigt einen Fahrzeugsitz mit zwei Einsätzen, die alternative Ausgestaltungen des Innenverkleidungsteils darstellen, und
- Fig. 10: zeigt eine Instrumententafel und eine Mittelkonsole mit Einsätzen, die gemäß der Erfindung ausgebildet sein können.

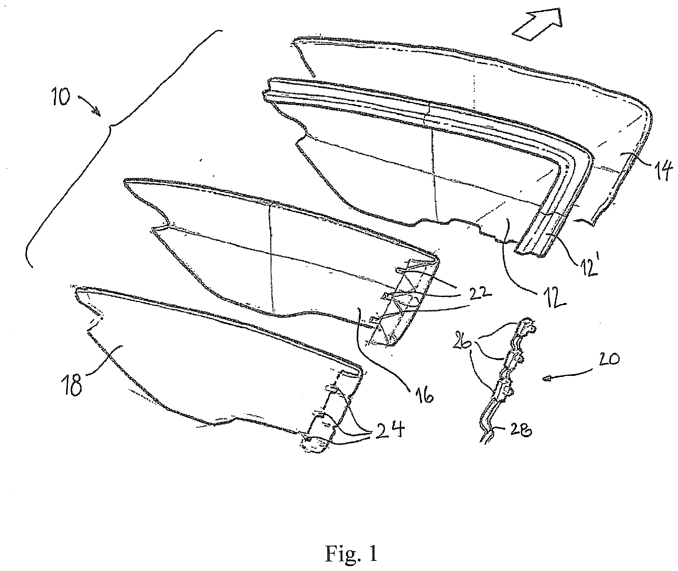

Fig. 1 zeigt ein Innenverkleidungsteil 10 in perspektivischer Explosionsdarstellung, wobei in dem gezeigten Ausführungsbeispiel das Innenverkleidungsteil 10 einen Einsatz für eine Türinnenverkleidung bildet. Das Innenverkleidungsteil 10 umfasst ein Trägerbauteil 12, eine Deckschicht 14, eine lichtemittierende Schicht 16 und eine Tragschicht 18 sowie ein Ansteuermodul 20 für die lichtemittierende Schicht 16.

Das Trägerbauteil 12 ist aus einem klaren transparenten oder transluzenten Kunststoff hergestellt, der weiß oder gefärbt, auch abschnittsweise unterschiedlich gefärbt, sein kann. Das Trägerbauteil 12 hat in dem in Fig. 1 gezeigten Ausführungsbeispiel einen umgebogenen Rand 12' mit einer Versteifungssicke sowie eine an die Türinnenverkleidung angepasste Außenkontur. Zusätzlich könnte das Trägerbauteil 12 eine oder mehrere Durchbrechungen, Sicken, Rippen, und/oder andere Strukturen sowie Anbauteile aufweisen, die hier jedoch nicht im Einzelnen dargestellt sind.

Beispiele für Materialien des Trägerbauteils 12 sind oben genannt, wobei diese Materialien in der Praxis alle Anforderungen an Bruchfestigkeiten, Gewichtsvorgaben etc. der Automobilindustrie erfüllen müssen. Für die Zwecke der Erfindung ist eine wichtige Eigenschaft des Trägerbauteils die Transparenz oder Tranluzenz, wobei der Träger vorzugsweise eine Lichtdurchlässigkeit im Bereich von nahezu 100% bis etwa 30% haben sollte. Die Erfindung ist auf keine bestimmte Lichtdurchlässigkeit beschränkt.

Die Deckschicht 14 wird in der gezeigten Ausführung als ein Zuschnitt an die Frontseite, auch als Sichtseite oder A-Seite bezeichnet, des Trägerbauteils 12 angepasst und auf die Frontseite des Trägerbauteils 12 aufkaschiert, geklebt oder auf andere geeignete Weise mit dem Trägerbauteil 12 verbunden. Die Deckschicht 14 kann aus jedem der oben beschriebenen Materialien bestehen und optional hinterschäumt sein. Sie kann transparent, teiltransparent oder transluzent, gefärbt oder ungefärbt sein. Ferner kann sie perforiert sein, eine genarbte oder anders strukturierte Oberfläche haben. Die Deckschicht kann auch ein durch Struktur und/oder Farbe gebildetes Muster, einen Schriftzug, ein Ornament oder dergleichen aufweisen. Es ist ferner möglich, die Deckschicht in unterschiedlichen Bereichen mit unterschiedlichen Transparenzgraden zu versehen, sie kann teilweise opak und teilweise transparent oder transluzent sein, wobei die Lichtdurchlässigkeit von nahezu 100 % bis zu wenigen Prozent reichen kann, wenn z.B. nur eine punktuelle Perforation in einer ansonsten opaken Deckschicht vorgesehen wird. Die Erfindung ist auf keine bestimmte Lichtdurchlässigkeit beschränkt.

Abweichend von der Darstellung in Fig. 1 ist es auch möglich, das Trägerbauteil 12 und die Deckschicht 14 in einem Arbeitsgang durch Hinterspritzen des Deckmaterials herzustellen, beispielsweise nach dem In-Mold-Grain- oder Negativ-Vakuum-Formverfahren. In der Regel wird die Deckschicht 14 die Frontseite des Innenverkleidungsteils 12 und dessen Seitenkanten so weit bedecken, dass die Außenränder der Deckschicht 14 nicht sichtbar sind, wenn die Innenverkleidung in dem Kraftfahrzeug montiert ist.

Auf die Rückseite oder B-Seite des Trägerbauteils 12 wird die lichtemittierende Schicht 16 aufgebracht, die in dem gezeigten Ausführungsbeispiel ein Lichtleitfasern enthaltendes Gewebe, z.B. ein Gewebe aus PMMA-Fasern ist. Solche Gewebe können so gestaltet sein, dass sie Licht zu beiden oder zu nur einer Oberfläche hin abgeben, sie können mit lichtundurchlässiger, z.B. schwarzer, Rückseite gewebt sein, sie können eingewebte Strukturen und Muster sowie Bereiche mit unterschiedlicher Lichtabgabeintensität aufweisen. Beispiele für geeignete Gewebe sind erhältlich beispielsweise von der ITP GmbH - Gesellschaft für intelligente textile Produkte, Chemnitz, DE, oder von der Brochier Technologies, Villeurbanne, FR, die ein unter dem Namen Lightex® bekanntes Gewebe vertreibt

Wie in Fig. 1 angedeutet, sind die Fasern des lichtleitenden Gewebes an einem Rand der lichtemittierenden Schicht 16 zusammengefasst, um Anschlussenden 22 zu bilden, an denen eine gesteuerte Lichtquelle angeschlossen werden kann, die durch das Ansteuermodul 20 bereitgestellt wird.

Die lichtemittierende Schicht 16 ist in ihrer Kontur an die Kontur des Trägerbauteils 12 angepasst, wobei sie an die Rückseite des Trägerbauteils 12 angelegt wird, jedoch nicht jeder einzelnen Kontur, Erhebung, Vertiefung etc. der Rückseite des Trägerbauteils 12 präzise folgen muss. Vielmehr kann die lichtemittierende Schicht 16 die Rückseite des Trägerbauteils 12 lose überspannen. Sofern in dem Trägerbauteil 12 Durchbrechungen vorgesehen sind, muss die lichtemittierende Schicht 16 keinen Ausschnitt aufweisen, der präzise an die Durchbrechung angepasst ist, sondern es ist möglich, das Gewebe der lichtemittierenden Schicht 16 in diesem Bereich in Längsrichtung aufzutrennen, ohne dabei die lichtleitenden Fasern zu durchtrennen, so dass die lichtleitenden Fasern um die Durchbrechung herumgeführt werden. Dadurch wird die Lichtabgabe durch die Durchbrechung nicht unterbrochen und kann von den Anschlussenden 22 aus gesehen hinter der Durchbrechung weitergeführt werden.

Die lichtemittierende Schicht 16 wird also, wie erläutert, an die Rückseite des Trägerbauteils 12 angelegt, muss diesem jedoch nicht in jedem Detail in ihrer Kontur entsprechen. Zum Beispiel muss die lichtemittierende Schicht 16 nicht präzise die Ausschnitte aufweisen, die in dem Ausführungsbeispiel der Fig. 1 am unteren Rand des Trägerbauteils dargestellt sind. Dadurch kommt es auch nicht zu entsprechenden Unterbrechungen der Lichtleitfasern und somit einer Unterbrechung der Lichtabgabe im, von den Anschlussenden aus gesehen, hinteren Bereich der lichtemittierenden Schicht 16. Des weiteren ist es möglich, die lichtemittierende Schicht 16 nicht als Zuschnitt, sondern als fertiges Webteil mit nahezu jeder gewünschten Kontur herzustellen, wobei dies so realisiert werden kann, dass an diesem Webteil die Lichtleitfasern von den Anschlussenden 22 bis zum gegenüberliegenden Ende der lichtemittierenden Schicht 16 ohne Unterbrechung durchlaufen.

Das Innenverkleidungsteil 10 wird durch die Tragschicht 18 abgeschlossen, wobei in der gezeigten Ausgestaltung die lichtemittierende Schicht 16 zunächst auf die Tragschicht 18 aufgebracht, z.B. aufgeklebt wird. In dem gezeigten Ausführungsbeispiel weist die Tragschicht Anschlussstifte 24 zur Verbindung mit den Anschlussenden 22 auf, die beispielsweise in Form von Steckkontakten ausgebildet sind. Im Übrigen entspricht die Kontur der Tragschicht 18 im Wesentlichen der der lichtemittierenden Schicht 16, und die beiden Schichten 18, 16 können miteinander verklebt oder auf andere Weise verbunden werden.

Die Tragschicht 18 ist in der Regel opak und ist aus einem der oben genannten Materialien hergestellt. Während die lichtemittierende Schicht aus einem Gewebe oder einer Folie oder dergleichen bestehen kann und keine Eigensteifigkeit aufweisen muss, kann die Tragschicht aus einem relativ starren Material mit zumindest einer gewissen Eigensteifigkeit hergestellt sein.

Das Ansteuermodul 20 umfasst in der gezeigten Ausgestaltung drei Lichtquellen 26 mit zugehöriger Ansteuerelektronik, die an die lichtemittierende Schicht 16 über die Anschlüsse 24 und die Anschlussstifte 22 angeschlossen werden können. Die Lichtquellen 26 sind über eine flexible Leiterplatte oder ein Flachbandkabel 26 mit einer Stromquelle und einer Steuerleitung verbunden, wobei dies nicht im Einzelnen dargestellt ist. Die Lichtquellen 26 können Anschlussbuchsen zur Aufnahme der Anschlussstifte 24 aufweisen. Das von den Lichtquellen 26 emittierte Licht wird in die Anschlussenden 22 der lichtemittierenden Schicht 16 und somit in deren Lichtleitfasern eingespeist.

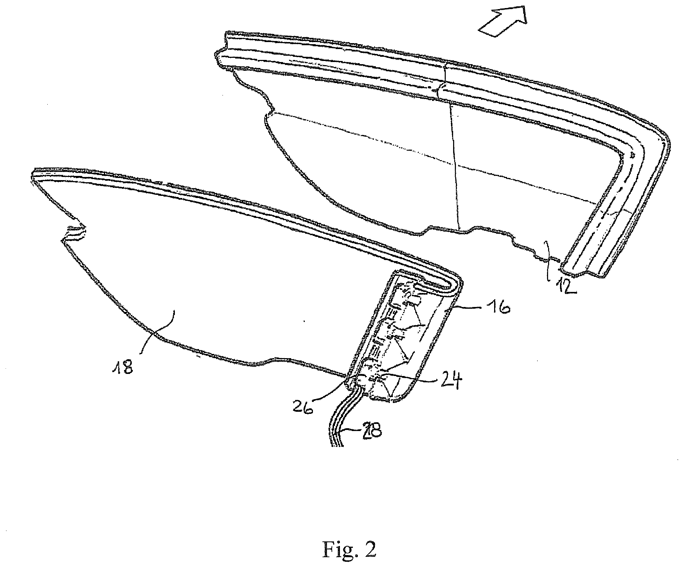

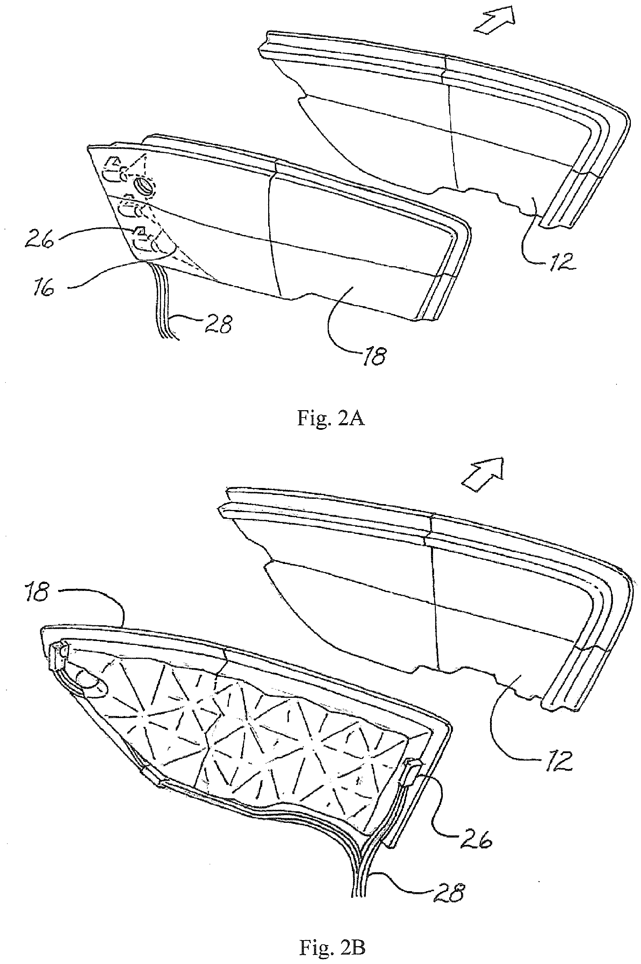

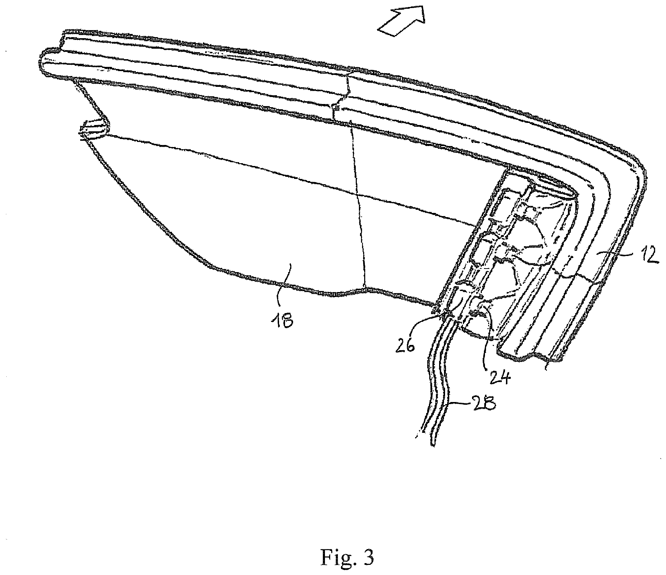

Fig. 2 zeigt die Innenverkleidung der Fig. 1 in teilmontiertem Zustand, und Fig. 3 zeigt die vollständig zusammengesetzte Innenverkleidung 10, wobei der Pfeil in Richtung des Innenraums des Kraftfahrzeuges weist. Entsprechende Komponenten wie in den vorhergehenden Figuren sind mit denselben Bezugszeichen bezeichnet und nicht nochmals im Einzelnen beschrieben.

In einer Ausgestaltung der Erfindung wird zunächst der Verbund aus Trägerbauteil 12 und Deckschicht 14 hergestellt. Dieser Verbund kann durch übliche Laminierverfahren, unter Anwendung von Wärme und Druck, durch Kleben, etc., aber auch durch Hinterspritzen der Deckschicht mit einem Kunststoff und/oder Schaummaterial hergestellt werden. Bei der Fertigung des Verbunds aus Trägerbauteil 12 und Deckschicht 14 ist keine besondere Anpassung des Herstellungsverfahrens an die Beleuchtungseinheit notwendig, weil diese erst in einem nachfolgenden Schritt an dem Verbund angebracht wird.

Tragschicht 18 und lichtemittierender Schicht 16 werden beispielsweise miteinander verklebt oder auf andere Weise verbunden, und in dem hier beschriebenen Beispiel wird das Ansteuermodul 20 an die Anschlussstifte 24 angeschlossen, wie in Fig. 2 gezeigt. Anschließend wird die vormontierte Einheit aus Tragschicht 18, lichtemittierender Schicht 16 und Ansteuermodul 20 an dem Verbund aus Trägerbauteil 12 und Deckschicht 14 angebracht. Die Verbindung zwischen Tragschicht/lichtemittierender Schicht 18/16 und dem Verbund aus Trägerbauteil 12 und Deckschicht 14 ist in der erfindungsgemäßen Ausführung lösbar. Sie kann beispielsweise durch eine Rastverbindung, unter Verwendung von Befestigungsklammern oder auch unter Verwendung eines lösbaren Klebstoffs realisiert sein. Die genannten Komponenten können aber auch dauerhaft verklebt werden, beispielsweise mit einem Klebeband oder -film, Heißkleber, Verstemmen unter Einsatz von Wärme, Ultraschall- oder Vibrationsschweißen, Nieten etc.

Die lösbare Verbindung zwischen Tragschicht/lichtemittierender Schicht 18/16 und dem Verbund aus Trägerbauteil 12 und Deckschicht 14 hat den Vorteil, dass die lichtemittierende Schicht 16 gewartet, entfernt und ersetzt werden kann.

Figur 2A zeigt in perspektivischer Darstellung eine alternative Ausgestaltung des Innenverkleidungsteils der Figur 1 in teilmontiertem Zustand. In Figur 2A sind das Trägerbauteil 12 und die Tragschicht 18 gezeigt, wobei sich zwischen dem Trägerbauteil 12 und der Tragschicht 18 die lichtemittierende Schicht 16 befindet. In dieser alternativen Ausgestaltung sind die Lichtquellen 26, welche mit der lichtemittierenden Schicht 16 gekoppelt sind, und die zugehörige Elektronik auf der A-Seite der Tragschicht 18 angeordnet, also auf der dem Trägerbauteil 12 zugewandten Seite. Dadurch sind Lichtquellen und Elektronik zwischen dem Trägerbauteil 12 und der Tragschicht 18 geschützt untergebracht. In dem gezeigten Ausführungsbeispiel wird als Lichtquelle 26 eine Anordnung aus LEDs verwendet.

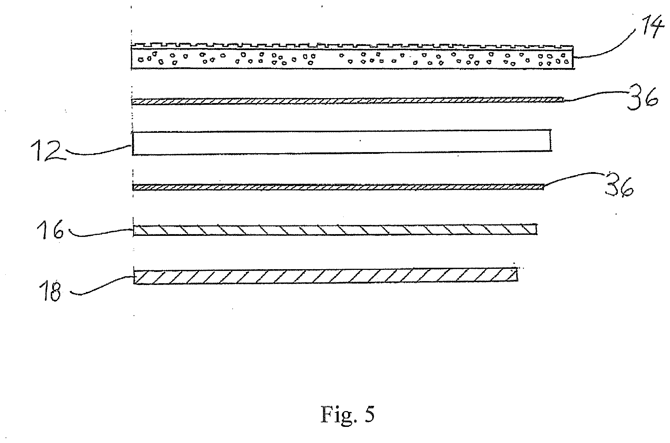

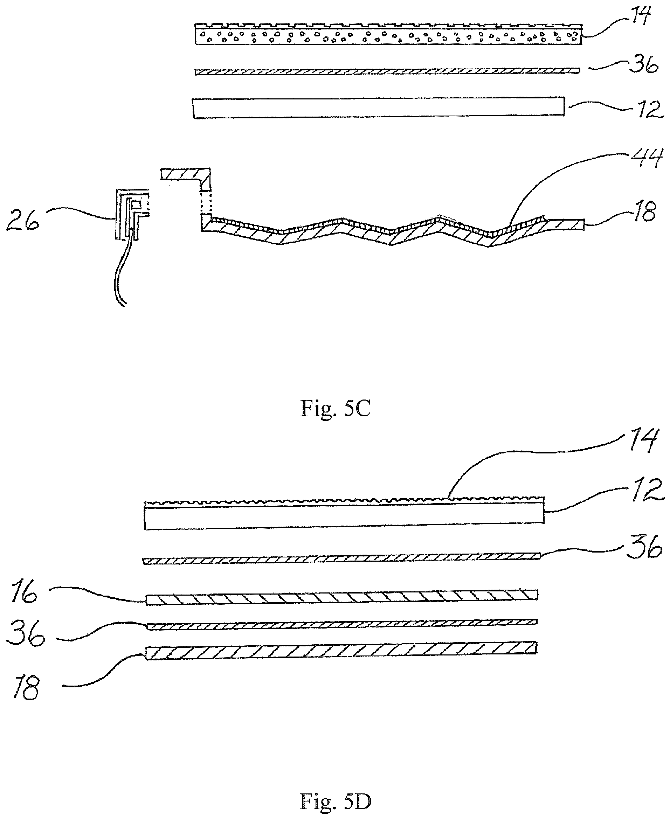

Figur 2B zeigt in perspektivischer Darstellung eine nicht erfindungsgemäße Alternative zur Ausgestaltung des Innenverkleidungsteil der Figur 1 in teilmontiertem Zustand. In dieser Ausgestaltung wird die lichtemittierende Schicht durch eine Reflektorfolie 44 auf der A-Seite der Tragschicht 18 gebildet, wie auch in der Schnittdarstellung der Figur 5C dargestellt ist. Die Reflektorfolie oder Reflektorschicht 44 hat sowohl lichtleitende als auch reflektierende Eigenschaften und nimmt Licht von der Lichtquelle 26 auf, um dieses über die Fläche der Tragschicht 18 zu verteilen und abzugeben. Für eine möglichst gleichmäßige und verlustarme Lichtabgabe können die Reflektorschicht 44 und die Tragschicht 18 geformt werden, z.B. durch Ausprägung einer Facettenstruktur in der Reflektorschicht 44. Die Reflektorschicht kann beispielsweise wie ein Retroreflektor gestaltet sein, der die einfallende Strahlung weitgehend unabhängig von der Ausrichtung des Reflektors großenteils in Richtung zur Vorderseite der Reflektorschicht 44 abgibt. Die genaue Gestalt der Reflektorschicht 44 kann empirisch durch CAD-Verarbeitung ermittelt werden, um die reflektierende Oberfläche zum Richten und Reflektieren des Lichtes in die gewünschte Richtung zu optimieren. Ziel ist es, das von möglichst wenig einzelnen Lichtquellen, z.B. LEDs, abgegebene Licht möglichst gleichmäßig über die Oberfläche der Reflektorschicht zu verteilen und abzustrahlen. Die Oberfläche der Reflektorschicht 44 oder auch der lichtleitenden Schicht 16 kann zusätzlich bearbeitet werden, beispielsweise durch Laserätzen, Gießen, Aufbringen weiterer optisch wirksamer Schichten, wie eines Richtfilms, etc..

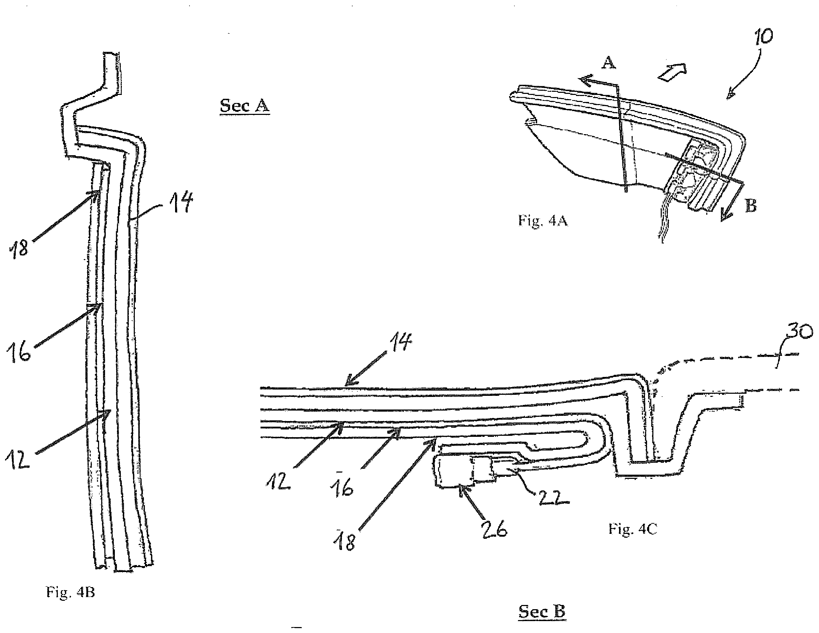

In den Schnittdarstellungen der Fig. 4B und 4C sind die oben beschriebenen Komponenten des Innenverkleidungsteils nochmals im Einzelnen dargestellt, wobei hinsichtlich Material und Verbindungstechnik das oben Gesagte gilt. In der Schnittdarstellung der Fig. 4C ist die Verbindung der Lichtquelle 26 mit der lichtemittierenden Schicht 16 über das Anschlussende 22 gut zu erkennen. Die Verbindung zwischen Lichtquellen und lichtemittierender Schicht kann mit oder ohne Zwischenschaltung der Tragschicht 18 und möglicherweise an der Tragschicht ausgebildeter Anschlüsse erfolgen. In der Schnittdarstellung der Fig. 4C ist ferner ein benachbartes Innenverkleidungsteil 30 gestrichelt angedeutet.

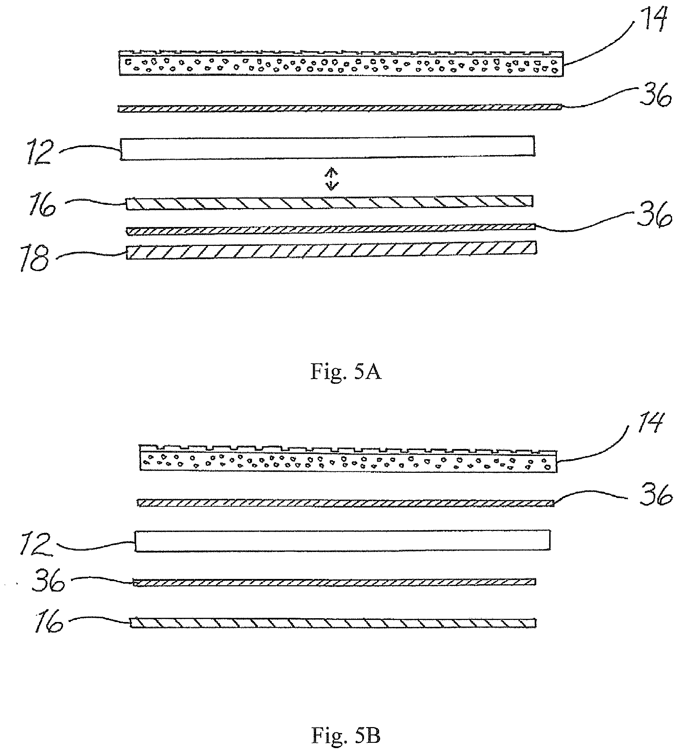

Fig. 5 zeigt in Schnittdarstellung einen weiteren möglichen Aufbau eines Beispiels des Innenverkleidungsteils, in auseinander gezogener Darstellung. Das Innenverkleidungsteil umfasst das Trägerbauteil 12, die Deckschicht 14, die lichtemittierende Schicht 16 und die Tragschicht 18, die grundsätzlich wie oben dargestellt aufgebaut sein können. In dem gezeigten Beispiel umfasst die Deckschicht 14 ein genarbtes Leder-, Kunstleder- oder Alcantaramaterial, das hinterschäumt ist. Die Transparenz der Lederschicht kann z.B. durch eine Perforation oder durch eine lokale Ausdünnung des Materials erzielt werden, wobei auch die Schaumschicht transluzent ist. Die Trägerschicht 12 kann aus einem der oben beschriebenen Materialien bestehen, z.B. aus einem transparenten PC-ABS Material. Die lichtemittierende Schicht 16 besteht z.B. aus einem gewebten Lichtleitfaser-PMMA-Stoff, und die optionale Tragschicht 18 kann aus Metall, Fasern, Pappe etc. bestehen. In dem in Fig. 5 gezeigten Beispiel werden sowohl die Deckschicht 14 als auch die lichtemittierende Schicht 16 mittels einer Klebschicht 36 an den beiden Seiten des Trägerbauteils 12 angebracht. Die Klebschicht 36 kann beispielsweise einen Heißkleber, Klebstoff, eine Klebeband, eine Klebefolie oder dergleichen aufweisen. Die Klebung kann permanent oder lösbar sein, wobei z.B. zwischen der Deckschicht 14 und der Trägerschicht 12 eine permanente und zwischen der Trägerschicht 12 und der lichtemittierenden Schicht 16 eine lösbare Verklebung vorgesehen sein kann.

Figur 5A zeigt eine auseinandergezogene Schnittdarstellung des Innenverkleidungsteils gemäß einer Alternative zu der Ausgestaltung der Figur 5. In dieser Alternative ist einerseits zwischen der Tragschicht 18 und der lichtemittierenden Schicht 16 eine weitere Klebschicht vorgesehen, um diese lösbar oder permanent miteinander zu verbinden. Andererseits ist zwischen dem Trägerbauteil 12 und der lichtemittierenden Schicht 16 ein Spalt (angedeutet durch den Doppelpfeil) gebildet, wobei die Klebschicht 36 der Figur 5 weggelassen ist. Durch diesen Spalt lassen sich die optischen Eigenschaften des Verkleidungsteils insgesamt weiter einstellen. Zwischen dem Trägerbauteil 12 und der lichtemittierenden Schicht 16 können an geeigneten Stellen Abstandshalter vorgesehen sein.

Eine weitere Alternative des Aufbaus des Innenverkleidungsteils ist in Figur 5B dargestellt, wobei dieser Aufbau weitgehend der Darstellung der Figur 5 entspricht, jedoch die Tragschicht 18 fehlt.

Figur 5C zeigt eine nicht erfindungsgemäße Variante des Innenverkleidungsteils in auseinandergezogener Schnittdarstellung, die beispielsweise bei der Ausgestaltung der Figur 2B zum Einsatz kommen kann. In der Ausgestaltung der Figur 5C ist statt der lichtemittierenden Schicht eine Reflektorschicht 44 vorgesehen, und die Reflektorschicht 44 und die Tragschicht 18 sind zur Optimierung der Reflektionseigenschaften strukturiert. Hierzu können z.B., wie oben dargelegt, die Reflektorschicht 44 und die Tragschicht 18 nach Art eines Retroreflektors mit Facetten ausgebildet sein. Form und Oberfläche der Reflektorschicht 44 können empirisch optimiert werden, um Anforderung an Lichtleitfähigkeit, Reflektion und Projektion des Lichtes zu optimieren. Wie in Figur 5C ebenfalls dargestellt, kann eine Lichtquelle 26 durch die Tragschicht 18 hindurchgeführt sein, um Licht in die Reflektorschicht 44 einzukoppeln.

Figur 5D zeigt eine Schnittdarstellung durch eine weitere Variante des Innenverkleidungsteils in auseinandergezogener Darstellung. In dieser Ausgestaltung umfasst das Innenverkleidungsteil ein Trägerbauteil 12, auf das unmittelbar eine Deckschicht 14 aufgebracht ist, welche als sogenannte SmartFoil™ gebildet ist. Eine SmartFoil™ ist ein von der Anmelderin entwickeltes Deckmaterial aus einer dünnen hinterspritzten Folie, z.B. aus TPU, PVC, TPO oder TPE. Die nicht hinterspritzte Folie hat eine Dicke von weniger als 1 mm, vorzugsweise weniger als 0,8 mm. Zum Herstellen der Deckschicht 14 wird diese in flacher Form in einem Formwerkzeug eingelegt und in dem Werkzeug hinterspritzt. Dabei erhält die Folie ihre endgültige Form und kann optional in der Form mit einer Narbe oder einer anderen Oberflächenstruktur versehen werden. Durch das Hinterspritzen bekommt die Deckschicht eine weiche Haptik. Die Deckschicht 14 wird mit dem Trägerbauteil 12 verbunden, wobei die lichtemittierende Schicht 16 und die optionale Tragschicht 18 beispielsweise mittels der oben beschriebenen Klebschichten 36 mit dem Trägerbauteil 12 verbunden werden. Wie in den vorhergehenden Ausführungen sind die Deckschicht 14 und das Trägerbauteil 12 aus einem transparenten oder semitransparenten, z.B. milchigen, Polymermaterial, wobei für das Trägerbauteil z.B. PP, ABS, eine Mischung aus ABS/PC oder PC verwendet werden können. Eine optionale Narbung der Deckschicht kann sowohl in der Form als auch in einem Vorverarbeitungsschritt ausgebildet werden.

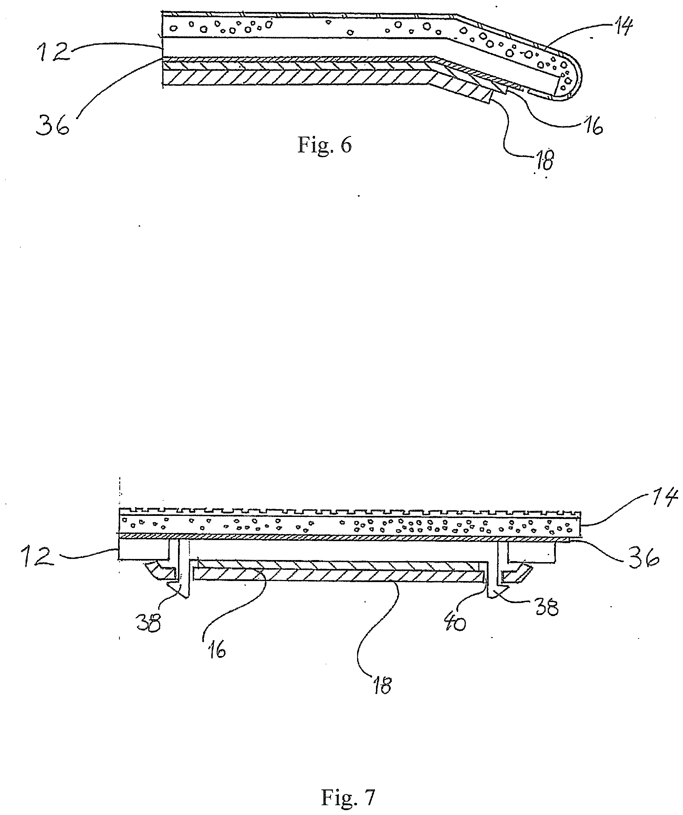

Fig. 6 zeigt eine Schnittdarstellung durch ein weiteres Ausführungsbeispiel des Innenverkleidungsteils, wobei entsprechende Komponenten wie in Fig. 5 mit denselben Bezugszeichen bezeichnet sind.

In dem Ausführungsbeispiel der Fig. 6 ist das Innenverkleidungsteil in zusammengesetztem Zustand gezeigt. In diesem Beispiel ist die Deckschicht 14 aus einer hinterschäumten Slush-Haut gebildet. Der Verbund aus Trägerbauteil 12 und Deckschicht 14 kann z.B. dadurch gebildet werden, dass das Trägerbauteil 12 und die Slush-Haut der Deckschicht 14 in ein Formwerkzeug eingelegt werden und der Raum zwischen Trägerbauteil 14 und Slush-Haut ausgeschäumt wird, um einen Verbund aus Trägerbauteil 12 und Deckschicht 14 herzustellen, ohne dass ein Laminiervorgang, eine Klebschicht oder dergleichen benötigt werden. Die Deckschicht 14 kann um eine Kante des Trägerbauteils 12 geführt sein. Tragschicht 18 und lichtemittierende Schicht 16 sind lösbar über eine Klebschicht 36 mit dem Trägerbauteil 12 verbunden, ähnlich wie in der Ausgestaltung der Fig. 5.

Fig. 7 zeigt eine Schnittdarstellung durch eine nochmals andere Ausführung des Innenverkleidungsteils, wobei der Verbund aus Trägerbauteil 12 und Deckschicht 14 grundsätzlich wie in Fig. 5 aufgebaut und mit Hilfe einer Klebschicht 36 hergestellt ist. In diesem Ausführungsbeispiel sind an dem Trägerbauteil 12 Rasthaken 38 angeformt, die durch korrespondierende Öffnungen 40 in der Tragschicht 18 greifen. Die Rasthaken 38 können aus demselben Material bestehen wie das Trägerbauteil 12 und können bei der Herstellung des Trägerbauteils 12 direkt an dieses angeformt werden. Sie sollten elastisch verformbar sein, so dass der Verbund aus Tragschicht 18 und lichtemittierender Schicht 16 einfach auf die Rückseite der Trägerschicht 12 aufgesteckt und abgenommen werden kann. Anstelle von Rasthaken kann auch eine lösbare Verbindung mittels Klemmen, Klammern oder dergleichen vorgesehen sein.

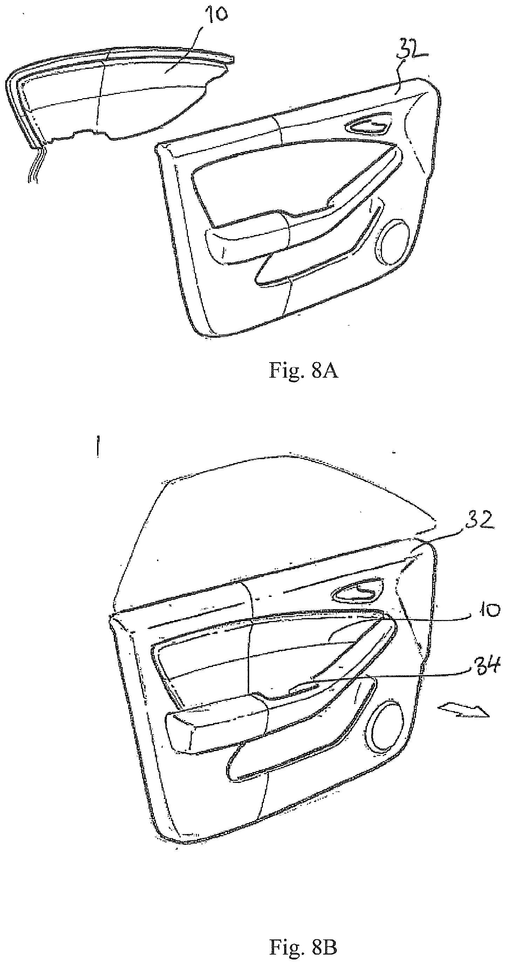

In den Darstellungen der Fig. 8A und 8B ist zu erkennen, wie das in den Fig. 1 bis 4 gezeigte Innenverkleidungsteil 10 in eine Türinnenverkleidung 32 eingesetzt wird. Durch die erfindungsgemäße Gestaltung des Innenverkleidungsteils 10 ist es möglich, dieses über seine gesamte Fläche gleichmäßig zu beleuchten und so eine Hintergrundbeleuchtung für die Türinnenverkleidung 32 sowie eine gezielte Beleuchtung des Griffbereichs 34 vorzusehen.

Wie dargelegt, ist die Erfindung nicht auf Einsatzteile oder Türinnenverkleidungen beschränkt. Die lichtemittierende Schicht kann auch auf andere Innenverkleidungsbereiche angewandt werden, wie Armstützen, Säulen, Ablagefächer und Taschen, Abschlussblenden, Teile der Instrumententafel, Handschuhfächer, Mittelkonsolen, Schwellen, Sitze etc., wobei die Erfindung jeweils auf Einsätze an diesen Teilen oder auf die gesamten Teile angewandt werden kann.

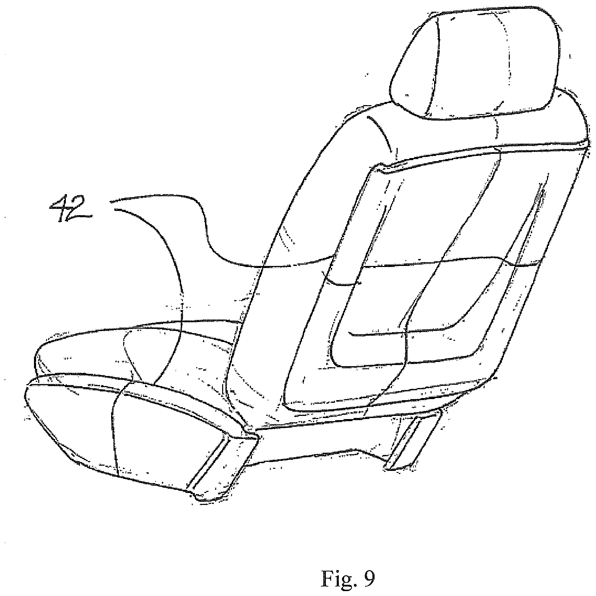

Fig. 9 zeigt in perspektivischer Darstellung eine weitere Anwendungsmöglichkeit des Innenverkleidungsteils, wobei in diesem Beispiel zwei beleuchtete Einsätze 42 vorgesehen sind, die an der Sitzrückseite und seitlich eines Fahrzeugsitzes angebracht sind, um eine Hintergrundbeleuchtung bereitzustellen. Die Einsätze 42 können grundsätzlich wie oben beschrieben aufgebaut sein.

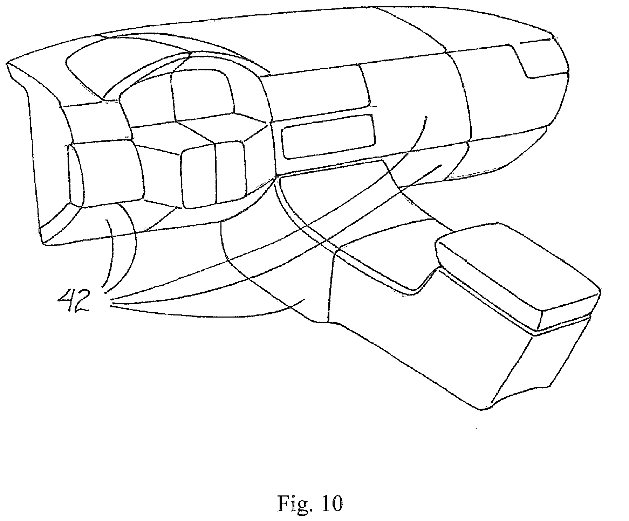

In Ausgestaltungen der Erfindung ist das Innenverkleidungsteil ein Einsatz, wobei die lichtemittierende Schicht in einem letzten Arbeitsschritt aufgebracht wird, nachdem der Verbund aus Trägerbauteil und Deckschicht fertig gestellt ist. Fig. 10 zeigt eine Instrumententafel und eine Mittelkonsole mit Einsätzen, die gemäß der Erfindung ausgebildet sein können. Wie in Figur 10 dargestellt, können die Innenverkleidungsteile beispielsweise als Teil einer Mittelkonsole, einer Instrumententafel, eines Handschuhfachs, einer Airbagabdeckung vorgesehen sein, um nur einige Beispiele zu nennen.

Vor der Endmontage kann der Einsatz getestet werden, und die lichtemittierende Schicht kann vorzugsweise lösbar und austauschbar an dem Einsatz angebracht sein. Dadurch kann das Innenverkleidungsteil gewartet werden, und während der Herstellung wird Ausschuss vermieden. Gleichwohl kann das Trägerteil aus einem üblichen, kostengünstigen Material hergestellt werden. Die Erfindung ist jedoch nicht auf Einsätze beschränkt und kann auch andere und größere Verkleidungseinheiten umfassen.

Das Innenverkleidungsteil der Erfindung ist beleuchteten Innenverkleidungen des Standes der Technik insofern überlegen, als die Lichtverteilung wesentlich gleichmäßiger ist und die Bildung von Hotspots vermieden wird. Das Trägerteil dient als Diffusor, so dass auch Rippen, Erhebungen, Sicken, Kanten etc. die gleichmäßige Lichtabgabe nicht beeinträchtigen. Es ist sogar möglich, die lichtemittierende Schicht ohne Unterbrechung der Lichtabgabe um Ausnehmungen und Ausschnitte in dem Trägerbauteil herumzuführen. Schließlich ist die lichtemittierende Schicht durch ihre Anordnung hinter dem Trägerbauteil gegen Beschädigung und Abnutzung besser geschützt.

### Bezugzeichenliste

- 10: Innenverkleidungsteil
- 12: Trägerbauteil
- 14: Deckschicht
- 16: lichtemittierende Schicht
- 18: Tragschicht
- 20: Ansteuermodul
- 22: Anschlussenden
- 24: Anschlussstifte
- 26: Lichtquellen
- 28: flexible Leiterplatte oder Flachbandkabel
- 30: benachbartes Innenverkleidungsteil
- 32: Türinnenverkleidung
- 34: Griffbereich
- 36: Klebschicht
- 38: Rasthaken
- 40: Öffnungen
- 42: Einsätze
- 44: Reflektorschicht

## Patentansprüche

1. Innenverkleidungsteil (10) für ein Kraftfahrzeug, welches umfasst:
ein Trägerbauteil (12), das die Kontur des Innenverkleidungsteils bestimmt,
eine Deckschicht (14), die auf einer Frontseite des Trägerbauteils (12) aufgebracht ist, und
eine lichtemittierende Schicht (16), die in ihrer Kontur an die Kontur des Trägerbauteils (12) angepasst und an die Rückseite des Trägerbauteils (12) angelegt und mit dieser lösbar verbunden ist,
wobei das Trägerbauteil (12) und die Deckschicht (14) lichtdurchlässig sind, **dadurch gekennzeichnet, dass** die lichtemittierende Schicht (16) ein Lichtleitfasern enthaltendes Gewebe aufweist und die Fasern Anschlussenden (22) zur Verbindung mit einer Lichtquelle haben, und
dass die lichtemittierende Schicht (16) auf eine Tragschicht (18) aufgebracht ist, die Anschlussstifte (24) aufweist, und die Anschlussenden (22) der lichtemittierenden Schicht (16) mit den Anschlussstiften (24) verbunden sind.

2. Innenverkleidungsteil (10) nach Anspruch 1, wobei die Deckschicht (14) mit dem Trägerbauteil (10) dauerhaft verbunden ist.

3. Innenverkleidungsteil (10) nach Anspruch 1 oder 2, wobei die lichtemittierende Schicht (16) mit dem Trägerbauteil (12) über eine Rast-, Schnapp- oder Schraubverbindung gekoppelt ist.

4. Innenverkleidungsteil (10) nach einem der vorangehenden Ansprüche, wobei die Tragschicht (18) lichtundurchlässig ist.

5. Innenverkleidungsteil (10) nach einem der vorangehenden Ansprüche, wobei die lichtemittierende Schicht (16) mit einer Lichtquelle, insbesondere einer LED-Anordnung gekoppelt ist.

6. Innenverkleidungsteil (10) nach einem der vorangehenden Ansprüche, wobei das Lichtleitfasern enthaltende Gewebe PMMA-Fasern aufweist.

7. Innenverkleidungsteil (10) nach einem der vorangehenden Ansprüche, wobei das Lichtleitfasern enthaltende Gewebe eine eingewebte Struktur und/oder eine lichtundurchlässige Rückseite aufweist.

8. Innenverkleidungsteil (10) nach einem der vorangehenden Ansprüche, wobei das Gewebe im Bereich eines Durchbruchs des Innenverkleidungsteils (10) derart aufgetrennt ist, dass die Lichtleitfasern um den Durchbruch herum geführt sind, ohne die Lichtleitung zu unterbrechen.

9. Innenverkleidungsteil (10) nach einem der vorangehenden Ansprüche, wobei das Trägerbauteil (12) aus einem gefärbten oder ungefärbten Kunststoff hergestellt ist und als Streukörper für das von der lichtemittierenden Schicht (16) emittierte Licht dient.

10. Innenverkleidungsteil nach einem der vorangehenden Ansprüche, wobei die lichtemittierende Schicht (16) eine Reflektorschicht umfasst.

11. Innenverkleidungsteil (10) nach einem der vorangehenden Ansprüche, das als ein Einlegeteil einer Innenverkleidung oder als ein vollständiges Innenverkleidungsteil, wie die Verkleidung einer Türinnenseite, einer Instrumententafel, einer Mittelkonsole, einer Säule, eines Dachhimmel, eines Sitzes, einer Armstütze, eines Aufbewahrungsfaches oder einer Abdeckung hiervon, ausgebildet ist.

12. Verfahren zur Herstellung eines Innenverkleidungsteil (10) nach einem der vorangehenden Ansprüche, welches umfasst:
Herstellen eines Verbundes aus dem Trägerbauteil (12) und der Deckschicht (14), wobei die Deckschicht (14) auf die Frontseite des Trägerbauteils (12) dauerhaft aufgebracht wird, und
Anlegen der lichtemittierende Schicht (16) an die Rückseite des Trägerbauteils (12) des
Verbundes und lösbares Verbinden der lichtemittierenden Schicht (16) mit dem Trägerbauteil (12),
wobei das Trägerbauteil (12) und die Deckschicht (14) lichtdurchlässig sind;
wobei die lichtemittierende Schicht ein Lichtleitfasern enthaltendes Gewebe aufweist und die Fasern über Anschlussenden (22) mit einer Lichtquelle verbunden werden; und
wobei die lichtemittierende Schicht (16) auf eine Tragschicht (18) aufgebracht wird, die Anschlussstifte (24) aufweist, und die Anschlussenden (22) der lichtemittierenden Schicht (16) mit den Anschlussstiften (24) verbunden werden.

## Claims

1. An interior lining component (10) for a motor vehicle, which comprises:
a carrier component (12), which determines the contour of the interior lining component,
a cover layer (14), which is applied to a front side of the carrier component (12), and
a light-emitting layer (16), the contour of which is adapted to the contour of the carrier component (12) and which is applied to the back side of the carrier component (12) and is detachably connected thereto,
wherein the carrier component (12) and the cover layer (14) are transparent,
**characterized in that**
the light-emitting layer (16) has a woven fabric containing optical fibers, and the fibers have connector ends (22) for connection to a light source, and
that the light-emitting layer (16) is applied to a carrier layer (18), which has connector pins (24), and the connector ends (22) of the light-emitting layer (16) are connected to the connector pins (24).

2. The interior lining component (10) according to claim 1, wherein the cover layer (14) is permanently connected to the carrier component (10).

3. The interior lining component (10) according to claim 1 or 2, wherein the light-emitting layer (16) is coupled to the carrier component (12) via a latch, snap or screw connection.

4. The interior lining component (10) according to one of the preceding claims, wherein the carrier layer (18) is opaque.

5. The interior lining component (10) according to one of the preceding claims, wherein the light-emitting layer (16) is coupled to a light source, in particular an LED array.

6. The interior lining component (10) according to one of the preceding claims, wherein the woven fabric containing optical fibers has PMMA fibers.

7. The interior lining component (10) according to one of the preceding claims, wherein the woven fabric containing optical fibers has a woven-in structure and/or an opaque back side.

8. The interior lining component (10) according to one of the preceding claims, wherein the woven fabric is unraveled in the region of an aperture of the interior lining component (10) such that the optical fibers are guided around the aperture without interrupting the light conduction.

9. The interior lining component (10) according to one of the preceding claims, wherein the carrier component (12) is made of a colored or uncolored plastic, and serves as a diffuser for the light emitted by the light-emitting layer (16).

10. The interior lining component according to one of the preceding claims, wherein the light-emitting layer (16) comprises a reflector layer.

11. The interior lining component (10) according to one of the preceding claims, which is embodied as an insert of an interior lining or as an entire interior lining component, such as the panel of the inside of a door, an instrument panel, a center console, a column, a roof liner, a seat, an armrest, a storage compartment or a cover thereof.

12. A method for producing an interior lining component (10) according to one of the preceding claims, which comprises:
producing a bond of the carrier component (12) and the cover layer (14), wherein the cover layer (14) is permanently applied to the front side of the carrier component (12), and
applying the light-emitting layer (16) to the back side of the carrier component (12) of the bond and detachably connecting the light-emitting layer (16) to the carrier component (12),
wherein the carrier component (12) and the cover layer (14) are transparent;
wherein the light-emitting layer has a woven fabric containing optical fibers, and the fibers are connected to a light source via connector ends (22); and
wherein the light-emitting layer (16) is applied to a carrier layer (18), which has connector pins (24), and the connector ends (22) of the light-emitting layer (16) are connected to the connector pins (24).

## Revendications

1. Partie de garniture intérieure (10) pour un véhicule automobile, qui comprend :
un composant porteur (12) qui détermine le contour de la partie de garniture intérieure,
une couche de recouvrement (14), qui est montée sur une face avant du composant porteur (12) et
une couche émettrice de lumière (16) qui est adaptée, au niveau de son contour, au contour du composant porteur (12) et qui est appuyée contre la face arrière du composant porteur (12) et reliée de manière amovible avec celui-ci,
le composant porteur (12) et la couche de recouvrement (14) étant transparente,
**caractérisée en ce que**
la couche émettrice de lumière (16) comprenant un tissu contenant des fibres optiques, et les fibres comprenant des extrémités de raccordement (22) pour une liaison avec une source de lumière et
**en ce que** la couche émettrice de lumière (16) est appliquée sur une couche porteuse (18) qui comprend des broches de raccordement (24) et les extrémités de raccordement (22) de la couche émettrice de lumière (16) sont reliées avec les broches de raccordement (24).

2. Partie de garniture intérieure (10) selon la revendication 1, la couche de recouvrement (14) étant reliée de manière durable avec le composant porteur (10).

3. Partie de garniture intérieure (10) selon la revendication 1 ou 2, la couche émettrice de lumière (16) étant couplée avec le composant porteur (12) par l'intermédiaire d'une liaison par encliquetage, clipsage ou vissage.

4. Partie de garniture intérieure (10) selon l'une des revendications précédentes, la couche porteuse (18) étant opaque.

5. Partie de garniture intérieure (10) selon l'une des revendications précédentes, la couche émettrice de lumière (16) étant couplée avec une source de lumière, plus particulièrement une disposition de LED.

6. Partie de garniture intérieure (10) selon l'une des revendications précédentes, le tissu contenant des fibres optiques comprenant des fibres de PMMA.

7. Partie de garniture intérieure (10) selon l'une des revendications précédentes, le tissu contenant des fibres optiques comprenant une structure tissée et/ou une face arrière opaque.

8. Partie de garniture intérieure (10) selon l'une des revendications précédentes, le tissu étant défait au niveau d'une percée de la partie de garniture intérieure (10) de façon à ce que les fibres optiques soient guidées autour de la percée sans interrompre la conduction de la lumière.

9. Partie de garniture intérieure (10) selon l'une des revendications précédentes, le composant porteur (12) étant constitué d'une matière plastique colorée ou non colorée et sert de diffuseur pour la lumière émise par la couche émettrice de lumière (16).

10. Partie de garniture intérieure selon l'une des revendications précédentes, la couche émettrice de lumière (16) comprenant une couche réflectrice.

11. Partie de garniture intérieure (10) selon l'une des revendications précédentes, qui est conçue comme un insert d'une garniture intérieure ou comme une partie de garniture intérieure complète, comme la garniture d'une face interne de portière, d'un tableau de bord, d'une console centrale, d'une colonne, d'un pavillon de toit, d'un siège, d'un accoudoir, d'un compartiment de rangement ou d'un couvercle de celui-ci.

12. Procédé de fabrication d'une partie de garniture intérieure (10) selon l'une des revendications précédentes, qui comprend :
la fabrication d'un composite constitué du composant porteur (12) et de la couche de recouvrement (14), la couche de recouvrement (14) étant appliquée de manière durable sur la face avant du composant porteur (12) et
l'appui de la couche émettrice de lumière (16) contre la face arrière du composant porteur (12) du composite et liaison amovible de la couche émettrice de lumière (16) avec le composant porteur (12),
le composant porteur (12) et la couche de recouvrement (14) étant transparentes ;
la couche émettrice de lumière comprenant un tissu contenant des fibres optiques et les fibres étant reliées avec une source de lumière par l'intermédiaire d'extrémités de raccordement (22) ; et
la couche émettrice de lumière (16) étant appliquée sur une couche porteuse (18) qui comprend des broches de raccordement (24) et les extrémités de raccordement (22) de la couche émettrice de lumière (16) sont reliées avec les broches de raccordement (24).
